# EUROPEAN PATENT APPLICATION

(11) **EP 4 772 974 A1**
(43) Date of publication of application: **08.07.2026**
(21) Application number: 24903926.4
(22) Date of filing: 16.10.2024
(51) Int. Cl.: G06F 3/023, G06F 3/04886, G06F 3/0484, G06N 3/02, G06V 10/82, G06F 3/0481

(54) **ELECTRONIC DEVICE FOR PROVIDING RECOMMENDED WORD VIA KEYBOARD APPLICATION**

(30) Priority: 12.12.2023 KR 20230180198; 03.01.2024 KR 20240001218; 01.02.2024 KR 20240016042
(71) Applicant: Samsung Electronics Co., Ltd., Suwon-si, Gyeonggi-do 16677 (KR)
(72) Inventor: KIM, Heewon, Suwon-si Gyeonggi-do 16677 (KR); JEONG, Hyesoon, Suwon-si Gyeonggi-do 16677 (KR); KIM, Junsung, Suwon-si Gyeonggi-do 16677 (KR); KIM, Sangheon, Suwon-si Gyeonggi-do 16677 (KR); YANG, Byoungwook, Suwon-si Gyeonggi-do 16677 (KR); JEONG, Changjin, Suwon-si Gyeonggi-do 16677 (KR); LIM, Yeunwook, Suwon-si Gyeonggi-do 16677 (KR)
(74) Representative: HGF
(86) International application number: PCT/KR2024/015685
(87) International publication number: WO 2025/127359

(57) **Abstract**

This electronic device may comprise: a display; a memory storing instructions; and a processor. The instructions, when executed by the processor, may instruct the electronic device to: display an execution screen of an application on the display; display a software keyboard via the display together with the execution screen of the application in response to an event for text input, while the execution screen of the application is displayed; while displaying, on the display, the software keyboard including a first area including a plurality of character keys and a second area for displaying one or more recommended words, receive a user input for one or more character keys from among the plurality of character keys; display at least one character corresponding to the user input in an input field in the execution screen; and display at least one recommended word in the second area by using the at least one character and information about a chat partner indicated by the execution screen.

## Description

### [Technical Field]

The present disclosure relates to an electronic device for providing a recommended word through a keyboard application.

### [Background Art]

A keyboard application is an application for a user to input characters on a mobile device, such as a smartphone. Through the keyboard application, the user may quickly and easily input desired characters. An input function of the keyboard application may be utilized in various applications, such as a messenger, an SNS, and document editing.

The above-described information may be provided as related art for the purpose of helping the understanding of the present disclosure. No claim or determination is raised as to whether any of the above-described content may be applied as prior art related to the present disclosure.

### [Disclosure]

### [Technical Solution]

According to an embodiment, an electronic device may comprise a display, memory storing instructions, and a processor. The instructions, when executed by the processor, may cause the electronic device to display an execution screen of an application on the display. The instructions, when executed by the processor, may cause the electronic device to, while the execution screen of the application is displayed, in response to an event for text input, display a software keyboard with the execution screen of the application through the display. The instructions, when executed by the processor, may cause the electronic device to, while displaying on the display the software keyboard comprising a first area including a plurality of character keys and a second area for displaying one or more recommended words, receive a user input with respect to one or more of the plurality of character keys. The instructions, when executed by the processor, may cause the electronic device to display at least one character corresponding to the user input within an input field in the execution screen. The instructions, when executed by the processor, may cause the electronic device to display at least one recommended word in the second area using the at least one character and information about a counterpart indicated by the execution screen.

According to an embodiment, an electronic device may comprise a display, memory storing instructions, and a processor. The instructions, when executed by the processor, may cause the electronic device to display, through the display, a screen including an execution screen of an application and a keyboard interface. The instructions, when executed by the processor, may cause the electronic device to identify a counterpart indicated by the execution screen using analysis of the execution screen. The instructions, when executed by the processor, may cause the electronic device to, in a case that the identified counterpart is a first counterpart, display a first recommended word within the keyboard interface in response to an input to a first text key received through the keyboard interface. The instructions, when executed by the processor, may cause the electronic device to, in a case that the identified counterpart is a second counterpart different from the first counterpart, display a second recommended word different from the first recommended word within the keyboard interface in response to an input to the first text key received through the keyboard interface.

According to an embodiment, an electronic device may comprise a display, memory storing instructions, and a processor. The instructions, when executed by the processor, may cause the electronic device to display an execution screen of an application through the display. The instructions, when executed by the processor, may cause the electronic device to, while the execution screen is displayed on the display, in response to an event for text input, display, through the display, a software keyboard in a portion of an entire display area of the display. The instructions, when executed by the processor, may cause the electronic device to, based on detecting a counterpart indicated by the execution screen using analysis of the execution screen, determine a keyboard usage pattern corresponding to the counterpart, and display, through the display, at least one recommended word using the keyboard usage pattern and at least one character received through the software keyboard.

According to an embodiment, a method of an electronic device comprising a display may comprise displaying an execution screen of an application through the display; while the execution screen of the application is displayed, in response to an event for text input, displaying a software keyboard with the execution screen of the application through the display; while displaying on the display the software keyboard comprising a first area including a plurality of character keys and a second area for displaying one or more recommended words, receiving a user input with respect to one or more of the plurality of character keys; displaying at least one character corresponding to the user input within an input field in the execution screen; and displaying at least one recommended word in the second area using the at least one character and information about a counterpart indicated by the execution screen.

### [Description of the Drawings]

FIG. 1 is a block diagram of an electronic device in a network environment according to various embodiments.
FIG. 2A illustrates an example of a screen displayed by an electronic device according to an embodiment.
FIG. 2B illustrates an example of a screen displayed by the electronic device according to an embodiment.
FIG. 2C illustrates an example of a screen displayed by the electronic device according to an embodiment.
FIG. 3A illustrates an example of a screen displayed by an electronic device according to an embodiment.
FIG. 3B illustrates an example of a screen displayed by the electronic device according to an embodiment.
FIG. 4 illustrates examples of screens displayed by an electronic device according to an embodiment.
FIG. 5 illustrates examples of screens displayed by an electronic device according to an embodiment.
FIG. 6 is an exemplary block diagram of an electronic device according to an embodiment.
FIG. 7 is a flowchart illustrating an operation of an electronic device according to an embodiment.
FIG. 8 is a flowchart illustrating an operation of an electronic device according to an embodiment.
FIG. 9 is an exemplary block diagram illustrating a generative artificial intelligence system according to an embodiment.

### [Mode for Invention]

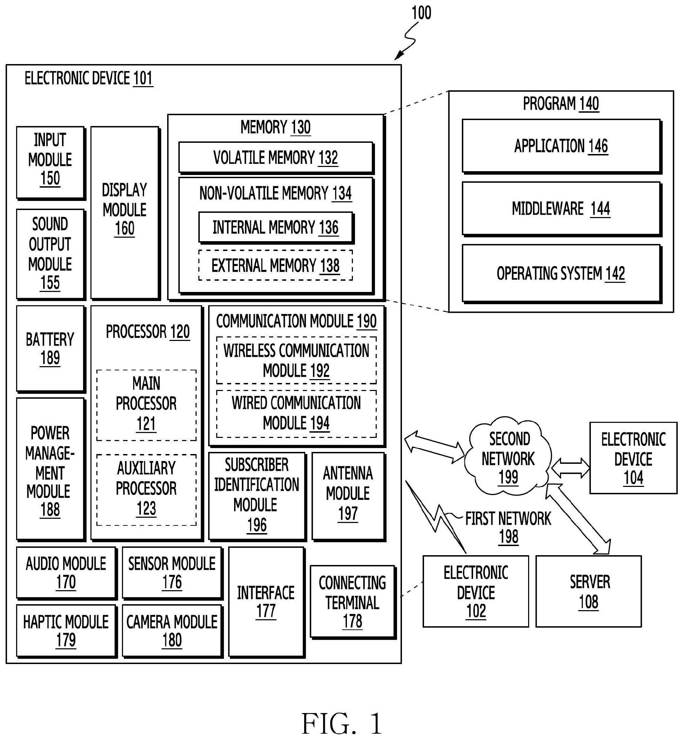

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

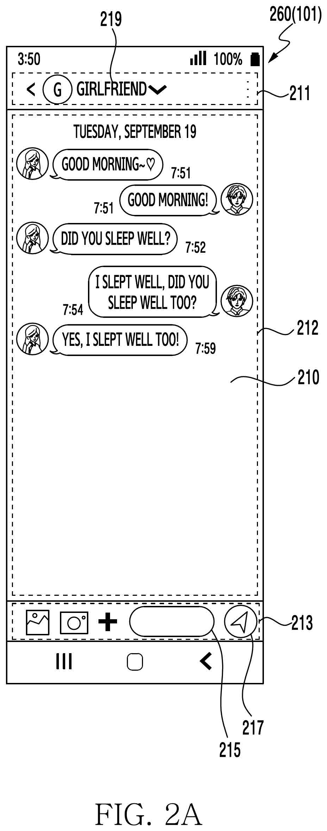

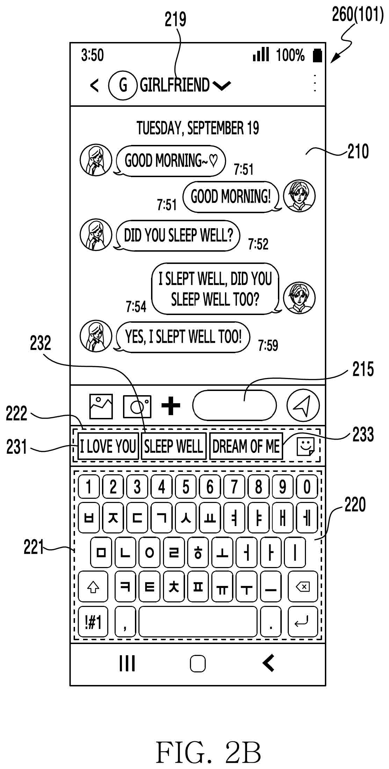

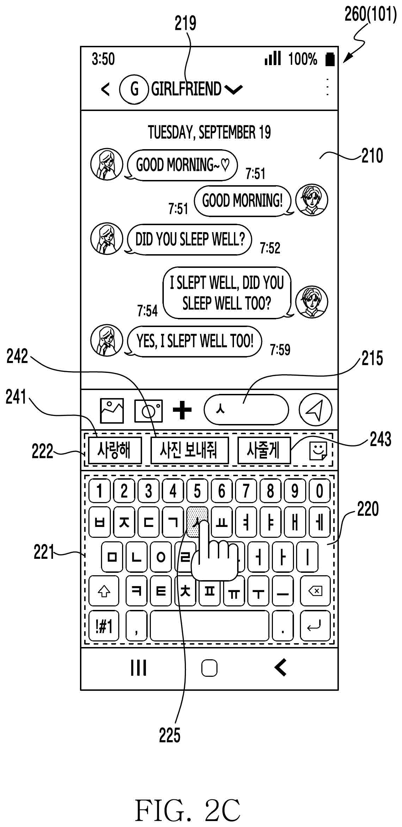

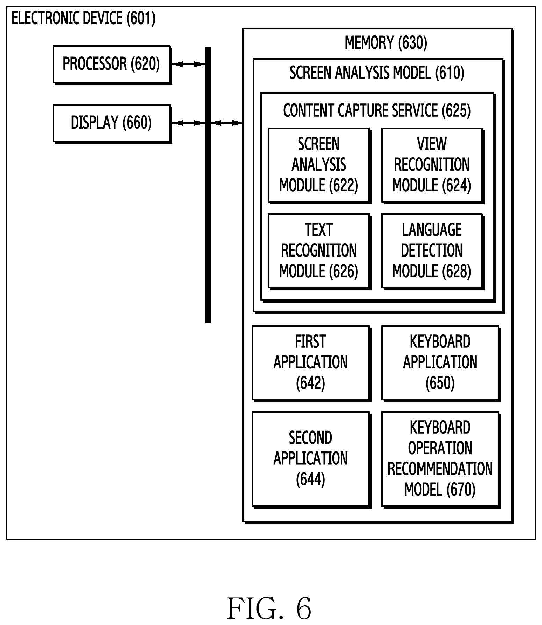

FIGS. 2A, 2B, and 2C illustrate examples of screens displayed by an electronic device according to an embodiment. An electronic device 101 of FIGS. 2A, 2B, and 2C may be an example of the electronic device 101 of FIG. 1. For example, a display 260 of the electronic device 101 may include at least a portion of the display module 160 of FIG. 1. In FIGS. 2A, 2B, and 2C, examples of a method in which the electronic device 101 provides recommended words through a keyboard application are illustrated. The keyboard application may be a keyboard application 650 of FIG. 6.

Referring to FIG. 2A, the electronic device 101 may display, through the display 260, an execution screen 210 of a first application (e.g., a first application 642 of FIG. 6). For example, the electronic device 101 may display the execution screen 210 within at least a partial area of the display 260. The first application may include an interactive application in which a recipient (or a counterpart) of a message exists, such as a message application.

In an embodiment, the execution screen 210 may include a first area 211, a second area 212, and a third area 213. The first area 211 may include a visual object 219 indicating information about a counterpart. For example, the visual object 219 may indicate a name of the counterpart stored in the electronic device 101 (e.g., a contact application). The second area 212 may indicate a message history transmitted and received between a user of the electronic device 101 and the counterpart. The third area 213 may include an input area 215 for inputting text and a transmission button 217 for transmitting text displayed within the input area 215 to the counterpart. In an embodiment, the first area 211 is illustrated as being positioned at the top of the execution screen 210, the third area 213 is illustrated as being positioned at the bottom of the execution screen 210, and the second area 212 is illustrated as being positioned between the first area 211 and the third area 213, but a layout of the execution screen 210 is not limited to the illustrated example.

According to an embodiment, the electronic device 101 may receive (or detect) an event for text input. For example, the electronic device 101 may receive an input to the input area 215 for text input.

Referring to FIG. 2B, according to an embodiment, the electronic device 101 may display, through the display 260, a screen including the execution screen 210 of the first application and an execution screen 220 of the keyboard application in response to the event for text input. For example, while the execution screen 210 of the first application is displayed on the display 260, the electronic device 101 may control the display 260 to display the execution screen 210 displayed in a first area of the display 260, in a second area of the display 260, and to display the execution screen 220 of the keyboard application in a third area of the display 260 in response to the event for text input. For example, the electronic device 101 may display the execution screen 210 displayed in the first area, in the second area that is included in the first area and has a smaller size than the first area, in response to the event for the text input. In addition, the electronic device 101 may display the execution screen 220 of the keyboard application in the third area that is included in the first area and has a smaller size than the first area. In contrast, the electronic device 101 may display the execution screen 210 of the first application in the second area that is identical to the first area, and display the execution screen 220 of the keyboard application in the third area in the first area as an overlap on the execution screen 210 of the first application, in response to the event for the text input (e.g., a floating keyboard). In an embodiment, displaying the execution screen 220 of the keyboard application may include launching and/or loading the keyboard application.

In an embodiment, the execution screen 220 of the keyboard application may include a first area 221 and a second area 222. The first area 221 may include visual objects (e.g., a plurality of character keys) corresponding to different characters. For example, the first area 221 may include key buttons corresponding to different characters. In an embodiment, the second area 222 may include visual objects 231, 232, and 233 indicating recommended words. Although not illustrated, the electronic device 101 may display a word (or a sentence) corresponding to the visual objects 231, 232, and 233 in the input area 215 within the execution screen 210 of the first application in response to an input to the visual objects 231, 232, and 233.

Referring to FIG. 2C, according to an embodiment, the electronic device 101 may receive an input to a key button (or a key image) 225 of the keyboard application. The electronic device 101 may display a character corresponding to the key button 225 in the input area 215 within the execution screen 210 of the first application based on receiving the input to the key button 225.

In an embodiment, the electronic device 101 may display visual objects 241, 242, and 243 indicating recommended words associated with the character corresponding to the key button 225 on the second area 222 of the execution screen 220 of the keyboard application. Although not illustrated, the electronic device 101 may display a word (or a sentence) corresponding to the visual objects 241, 242, and 243 in the input area 215 within the execution screen 210 of the first application in response to an input to the visual objects 241, 242, and 243.

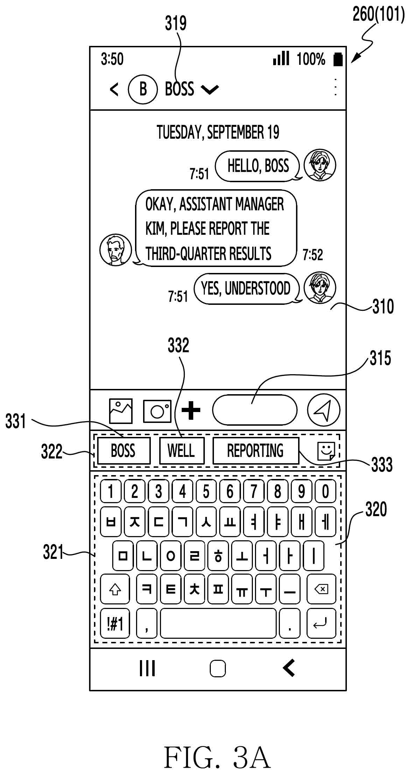

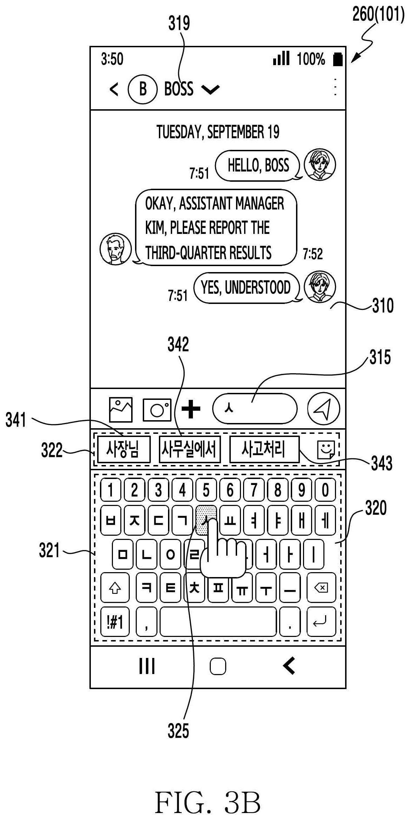

FIGS. 3A and 3B illustrate examples of screens displayed by an electronic device according to an embodiment. An electronic device 101 of FIGS. 3A and 3B may be an example of the electronic device 101 of FIG. 1.

A first application having an execution screen 310 illustrated in FIGS. 3A and 3B and a first application having the execution screen 210 illustrated in FIGS. 2A, 2B, and 2C may be the same as each other. For example, the first application having the execution screen 310 of FIGS. 3A and 3B may be the interactive application such as a message application.

With respect to the execution screen 310, an input area 315, and an execution screen 320 illustrated in FIGS. 3A and 3B, descriptions of the execution screen 210, the input area 215, and the execution screen 220 of FIGS. 2A, 2B, and 2C may be applied in a substantially identical or corresponding manner.

Referring to FIG. 3A, in an embodiment, the execution screen 310 of the first application may include a visual object 319 indicating a counterpart. The counterpart indicated by the execution screen 310 may be different from the counterpart indicated by the execution screen 210 of FIG. 2A.

In an embodiment, a second area 322 of a keyboard application may include visual objects 331, 332, and 333 indicating recommended words. According to an embodiment, the electronic device 101 may provide a recommended word according to a counterpart of the interactive application. For example, a counterpart indicated by the execution screen 210 of FIG. 2B is 'girlfriend', and recommended words corresponding to the counterpart may include 'I love you', 'sleep well', and 'dream of me'. In contrast, a counterpart indicated by the execution screen 310 of FIG. 3A is 'boss', and recommended words corresponding to the counterpart may include 'Boss', 'well', and 'reporting'.

Referring to FIG. 3B, according to an embodiment, the electronic device 101 may receive an input to a key button 325 of the keyboard application. The electronic device 101 may display visual objects 341, 342, and 343 indicating recommended words associated with the character corresponding to the key button 325 on the second area 322 of the execution screen 320 of the keyboard application. In an embodiment, the character corresponding to the key button 325 may be the same as a character corresponding to the key button 225 of FIG. 2C.

According to an embodiment, even when the same key button is input, the electronic device 101 may provide a recommended word according to a counterpart of the interactive application. For example, a counterpart indicated by the execution screen 210 of FIG. 2C is 'girlfriend', and recommended words associated with the character ' 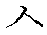 ' input through the key button 225 and corresponding to the counterpart may include ' 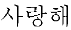 ' (I love you), ' 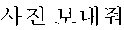 ' (Send me a photo), and ' 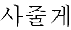 ' (I will buy it for you). In contrast, a counterpart indicated by the execution screen 310 of FIG. 3B is 'boss', and recommended words associated with the character ' 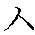 ' input through the key button 325 and corresponding to the counterpart may include ' 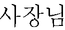 ' (Boss), ' 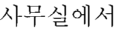 ' (at the office), and ' 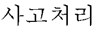 ' (accident handling). In an embodiment, it has been described that an input of a character for providing a recommended word is performed through an input to a key button (e.g., the key button 325) of the keyboard application, but it is not limited thereto. For example, the input of a character for providing a recommended word may be performed through an external input device (e.g., a hardware keyboard) connected to the electronic device 101 wirelessly or by wire.

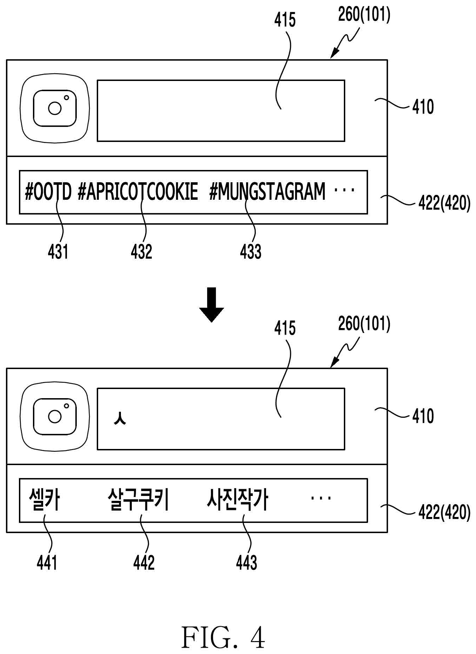

FIG. 4 illustrates examples of screens displayed by an electronic device according to an embodiment. An electronic device 101 of FIG. 4 may be an example of the electronic device 101 of FIG. 1. In FIG. 4, examples of a method in which the electronic device 101 provides a recommended word through a keyboard application are illustrated. The keyboard application may be a keyboard application 650 of FIG. 6.

Referring to FIG. 4, the electronic device 101 may display, through a display 260, an execution screen 410 of a second application (e.g., a second application 644 of FIG. 6). In an embodiment, the second application may be an application different from the first application described with reference to FIGS. 2A, 2B, 2C, 3A, and 3B. For example, the second application may be an SNS application. For example, the second application may be a non-interactive application in which a counterpart related to text input does not exist.

According to an embodiment, the electronic device 101 may receive (or detect) an event for text input. For example, the electronic device 101 may receive an input to an input area 415 of the execution screen 410 of the second application. The electronic device 101 may display an execution screen 420 of the keyboard application in response to receiving the input to the input area 415. In FIG. 4, for convenience of description, only a second area 422 among a first area (e.g., the first area 321 of FIG. 3B) and the second area 422 of the execution screen 420 of the keyboard application is illustrated.

In an embodiment, the electronic device 101 may display visual objects 431, 432, and 433 indicating recommended words through the display 260. For example, the electronic device 101 may display the visual objects 431, 432, and 433 in the second area 422 of the execution screen 420 of the keyboard application. For example, the visual objects 431, 432, and 433 may include text associated with the second application, such as '#OOTD', '#ApricotCookie', and '#Mungstagram'.

According to an embodiment, the electronic device 101 may provide a recommended word according to an application. For example, recommended words provided in the interactive application of FIG. 3A may include 'Boss, 'well', and 'reporting'. In contrast, recommended words provided in the non-interactive application of FIG. 4 may include '#OOTD', '#ApricotCookie', and '#Mungstagram'. The electronic device 101 may enhance user convenience by providing a recommended word suitable for an application.

According to an embodiment, the electronic device 101 may receive an input to a key button (not illustrated) of the keyboard application. The electronic device 101 may display a character corresponding to the key button in the input area 415 within the execution screen 410 of the second application based on receiving the input to the key button. For example, in case that the key button corresponding to ' 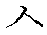 ' is input, ' 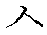 ' may be displayed in the input area 415.

In an embodiment, the electronic device 101 may display visual objects 441, 442, and 443 indicating recommended words associated with the character corresponding to the key button on the second area 422 of the execution screen 420 of the keyboard application. For example, in case that the key button corresponding to ' 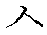 ' is input, the visual objects 441, 442, and 443 including text such as ' 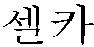 ' (selfie), ' 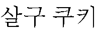 ' (apricot cookie), and ' 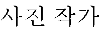 ' (photographer) associated with the second application and the input character ' 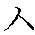 ' may be displayed.

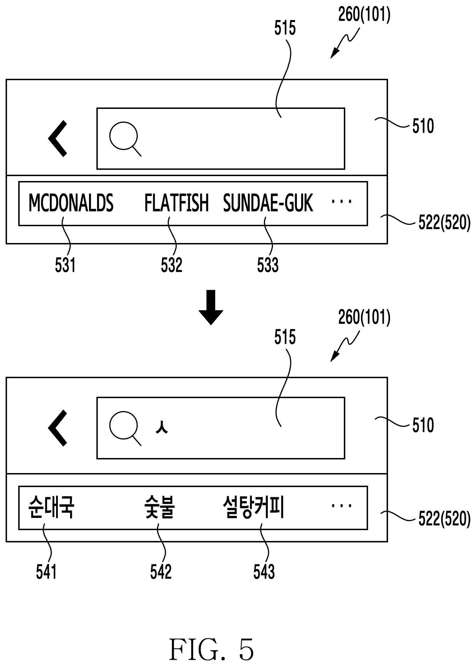

FIG. 5 illustrates examples of screens displayed by an electronic device according to an embodiment. An electronic device 101 of FIG. 5 may be an example of the electronic device 101 of FIG. 1. In FIG. 5, examples of a method in which the electronic device 101 provides a recommended word through a keyboard application are illustrated. The keyboard application may be a keyboard application 650 of FIG. 6.

Referring to FIG. 5, the electronic device 101 may display, through a display 260, an execution screen 510 of a third application (e.g., a second application 644 of FIG. 6). In an embodiment, the third application may be an application different from the first application described with reference to FIGS. 2A, 2B, 2C, 3A, and 3B. For example, the third application may be a delivery application. For example, the third application may be a non-interactive application in which a counterpart related to text input does not exist. In an embodiment, the third application may be an application different from the second application described with reference to FIG. 4. Although the third application and the second application both belong to the non-interactive application, the third application may be a delivery application, and the second application may be an SNS application.

According to an embodiment, the electronic device 101 may receive (or detect) an event for text input. For example, the electronic device 101 may receive an input to an input area 515 of the execution screen 510 of the third application. The electronic device 101 may display an execution screen 520 of the keyboard application in response to receiving the input to the input area 515. In FIG. 5, for convenience of description, only a second area 522 among a first area (e.g., the first area 321 of FIG. 3B) and the second area 522 of the execution screen 520 of the keyboard application is illustrated.

In an embodiment, the electronic device 101 may display visual objects 531, 532, and 533 indicating recommended words through the display 260. For example, the electronic device 101 may display the visual objects 531, 532, and 533 in the second area 522 of the execution screen 520 of the keyboard application. For example, the visual objects 531, 532, and 533 may include text associated with the third application, such as 'McDonalds', 'Flatfish', and 'Sundae-guk'.

According to an embodiment, the electronic device 101 may provide a recommended word according to an application. For example, recommended words provided in the SNS application of FIG. 4 may include '#OOTD', '#ApricotCookie', and '#Mungstagram'. In contrast, recommended words provided in the delivery application of FIG. 5 may include 'McDonalds', 'Flatfish', and 'Sundae-guk'. The electronic device 101 may enhance user convenience by providing a recommended word suitable for an application.

According to an embodiment, the electronic device 101 may receive an input to a key button (not illustrated) of the keyboard application. The electronic device 101 may display a character corresponding to the key button in the input area 515 within the execution screen 510 of the third application based on receiving the input to the key button. For example, in case that the key button corresponding to ' 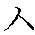 ' is input, ' 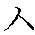 ' may be displayed in the input area 515.

In an embodiment, the electronic device 101 may display visual objects 541, 542, and 543 indicating recommended words associated with the character corresponding to the key button on the second area 522 of the execution screen 520 of the keyboard application. For example, in case that the key button corresponding to ' 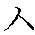 ' is input, the visual objects 541, 542, and 543 including text such as ' 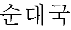 ' (Sundae-guk), ' 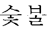 ' (charcoal fire), and ' 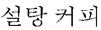 ' (sugar coffee) associated with the third application and the input character ' 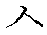 ' may be displayed.

FIG. 6 is an exemplary block diagram of an electronic device according to an embodiment.

Referring to FIG. 6, an electronic device 601 according to an embodiment may include a processor 620, a display 660, and memory 630. In an embodiment, the electronic device 601 may be an example of the electronic device 101 of FIG. 1. For example, the processor 620, the display 660, and the memory 630 of the electronic device 601 may include the processor 120, the display module 160, and the memory 130 of the electronic device 101, respectively.

In an embodiment, the processor 620, the display 660, and/or the memory 630 may be electrically and/or operatively connected to each other by a communication bus. Hereinafter, hardware components being operatively coupled may mean that a direct connection or an indirect connection between the hardware components is established by wire or wirelessly such that a second hardware component is controlled by a first hardware component among the hardware components.

According to an embodiment, the processor 620 of the electronic device 601 may include a hardware component for processing data based on one or more instructions. The hardware component for processing data may include, for example, an arithmetic and logic unit (ALU), a floating point unit (FPU), and a field programmable gate array (FPGA). As an example, the hardware component for processing data may include a central processing unit (CPU), a graphics processing unit (GPU), a digital signal processing (DSP), a microcontroller (MCU), and/or a neural processing unit (NPU). The number of processors 620 may be one or more. For example, the processor 620 may have a structure of a multi-core processor such as a dual core, a quad core, or a hexa core.

According to an embodiment, the display 660 of the electronic device 601 may output visualized information to a user. For example, the display 660 may be controlled by the processor 620 and/or the GPU to output visualized information to the user.

According to an embodiment, the memory 630 may include a hardware component for storing data and/or an instruction input to the processor 620 and/or output from the processor 620. The memory 630 may include, for example, a volatile memory such as a random-access memory (RAM) and/or a non-volatile memory such as a read-only memory (ROM). The volatile memory may include, for example, at least one of a dynamic RAM (DRAM), a static RAM (SRAM), a Cache RAM, and a pseudo SRAM (PSRAM). The non-volatile memory may include, for example, at least one of a programmable ROM (PROM), an erasable PROM (EPROM), an electrically erasable PROM (EEPROM), a flash memory, a hard disk, a compact disk, and an embedded multimedia card (eMMC).

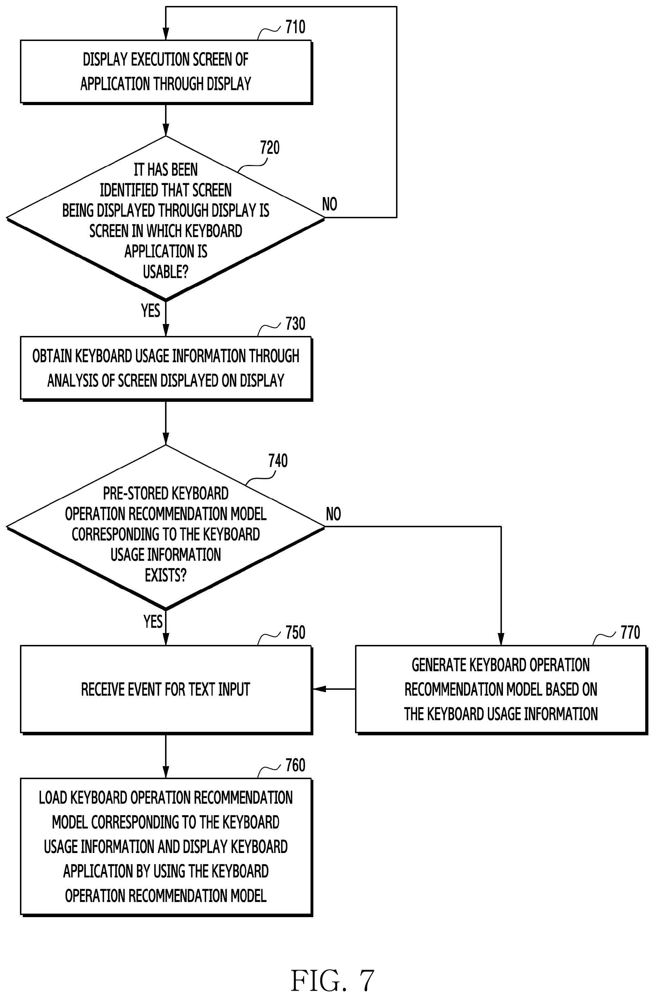

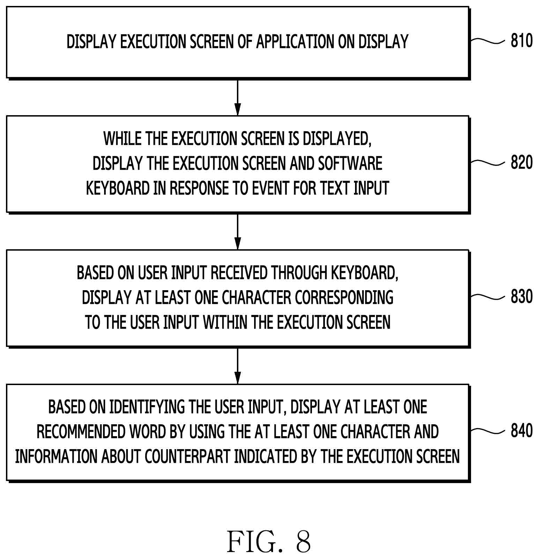

According to an embodiment, in the memory 630 of the electronic device 601, one or more instructions (or commands) indicating a computation and/or an operation to be performed on data by the processor 620 of the electronic device 601 may be stored. A set of one or more instructions may be referred to as a program, firmware, an operating system, a process, a routine, a sub-routine, and/or an application. Hereinafter, an application being installed in an electronic device (e.g., the electronic device 601) may mean that one or more instructions provided in a form of an application are stored in the memory 630, and that the one or more applications are stored in a format (e.g., a file having an extension designated by an operating system of the electronic device 601) executable by a processor of the electronic device. According to an embodiment, the electronic device 601 may perform operations of FIGS. 7 and 8 by executing one or more instructions stored in the memory 630.

According to an embodiment, programs installed in the electronic device 601 may include a screen analysis model 610, a first application 642, a second application 642, a keyboard application 650, and a keyboard operation recommendation model 670.

In an embodiment, the screen analysis model 610 may include a content capture service 625 provided as a framework service. The content capture service 625 may include the screen analysis model 610 for detecting a change in a screen displayed on the display 660, a view recognition module 624 for recognizing and analyzing a screen displayed on a display 260 by dividing the screen into framework view units, a text recognition module 626 for recognizing and extracting text displayed on the screen of the display 260, and a language detection module 628 for detecting a language corresponding to the extracted text.

In an embodiment, the screen analysis model 610 may detect an event such as a change in the screen displayed on the display 260. The screen analysis model 610 may analyze the screen displayed on the display 260. As a non-limiting example, the screen analysis model 610 may analyze the screen displayed on the display 260 in response to detecting an event such as the change in the screen.

For example, the screen analysis model 610 may identify, by using analysis of the screen of the display 260, whether the screen is a screen in which the keyboard application 650 may be used. For example, the screen analysis model 610 may identify whether the screen is a screen in which the keyboard application 650 may be used by identifying whether a view area including a text input field exists among a plurality of view areas in the screen. For example, referring to FIG. 2A, the screen analysis model 610 may determine that the execution screen 210 is a screen in which the keyboard application 650 may be used by identifying the input area 215 in the third area 213. For example, referring to FIG. 3A, the screen analysis model 610 may determine that the execution screen 310 is a screen in which the keyboard application 650 may be used by identifying the input area 315 within the execution screen 310. For example, referring to FIG. 4, the screen analysis model 610 may determine that the execution screen 410 is a screen in which the keyboard application 650 may be used by identifying the input area 415 within the execution screen 410. Referring to FIG. 5, the screen analysis model 610 may determine that the execution screen 510 is a screen in which the keyboard application 650 may be used by identifying the input area 515 within the execution screen 510.

In an embodiment, the screen analysis model 610 may obtain information about the screen based on identifying that the screen of the display 260 is a screen in which the keyboard application 650 may be used. For example, the screen analysis model 610 may obtain information about the screen by analyzing the screen for each view area. The information about the screen may include, for example, information about an application displayed on the display 260, a counterpart indicated by the screen, conversation content with the counterpart indicated by the screen, a keyboard setting pattern, and a keyboard input pattern.

For example, the screen analysis model 610 may obtain information indicating which application is displayed on the display 260, based on analysis of a layout of the screen displayed on the display 260. For example, referring to FIG. 2A, the screen analysis model 610 may obtain information indicating that the first application corresponding to the execution screen 210 is a message application based on analysis of a layout of the execution screen 210. For example, referring to FIG. 3A, the screen analysis model 610 may obtain information indicating that the first application corresponding to the execution screen 310 is a message application based on analysis of a layout of the execution screen 310. For example, referring to FIG. 4, the screen analysis model 610 may obtain information indicating that the second application corresponding to the execution screen 410 is an SNS application based on analysis of a layout of the execution screen 410. For example, referring to FIG. 5, the screen analysis model 610 may obtain information indicating that the third application corresponding to the execution screen 510 is a delivery application based on analysis of a layout of the execution screen 510.

For example, referring to FIG. 2A, the screen analysis model 610 may obtain information about a counterpart indicated by the execution screen 210 based on text extracted from the visual object 219 in the first area 211 of the execution screen 210. In an embodiment, the electronic device 601 may obtain information about the counterpart based on text (and/or an emoji) extracted from the execution screen 210. For example, the electronic device 601 may determine a relationship with the counterpart by analyzing conversation content in the second area 212 of the execution screen 210. For example, referring to FIG. 3A, the screen analysis model 610 may obtain information about a counterpart indicated by the execution screen 310 based on text extracted from the visual object 319 in the execution screen 310. The information about the counterpart may include at least one of the counterpart's phone number, address, group to which the counterpart belongs, ID, and stored name. To obtain such information about the counterpart, pre-stored contact information may be used in addition to text extracted from an execution screen of an application. The contact information may include information stored in relation to a contacts application. For example, the electronic device 601 may confirm contact information corresponding to text extracted from the visual object 319 to obtain information about the counterpart. The electronic device 601 may obtain at least a portion of the contact information confirmed as corresponding to the text extracted from the visual object 319 as information about the counterpart.

For example, referring to FIG. 2A, the screen analysis model 610 may obtain information about a keyboard setting pattern and a keyboard input pattern of a user with respect to the counterpart indicated by the execution screen 210 based on text (and/or an emoji) extracted from a message in the second area 212 of the execution screen 210. For example, referring to FIG. 3A, the screen analysis model 610 may obtain information about a keyboard setting pattern and a keyboard input pattern of the user with respect to the counterpart indicated by the execution screen 310 based on text extracted from a message in the execution screen 310. The information about the keyboard setting pattern and the keyboard input pattern may be used to provide a recommended word according to the counterpart.

Alternatively, at least some of information about an application, a counterpart indicated by the screen, a keyboard setting pattern, and a keyboard input pattern may be provided by the first application 642 or the second application 644.

According to an embodiment, the first application 642 may include a messenger application of the electronic device 601. The second application 644 may include an SNS application, an application for providing a real-time streaming service, and a delivery application, but is not limited thereto. For example, the first application 642 may be an interactive application in which a counterpart of a user controlling the electronic device 601 exists, and the second application 644 may be a non-interactive application in which the counterpart does not exist. In an embodiment, the first application 642 may be the first application corresponding to the execution screen 210 of FIGS. 2A, 2B, and 2C. In an embodiment, the first application 642 may be the first application corresponding to the execution screen 310 of FIGS. 3A and 3B. In an embodiment, the second application 644 may include the second application corresponding to the execution screen 410 of FIG. 4 and/or the third application corresponding to the execution screen 510 of FIG. 5.

In an embodiment, the keyboard application 650 used by the user to input a character may convert a user input to a key button into a character. In an embodiment, the electronic device 101 may obtain information about a keyboard setting pattern and a keyboard input pattern of the user by using the keyboard application 650. In an embodiment, the keyboard application 650 may be referred to as a keyboard, a virtual keyboard, or a software keyboard.

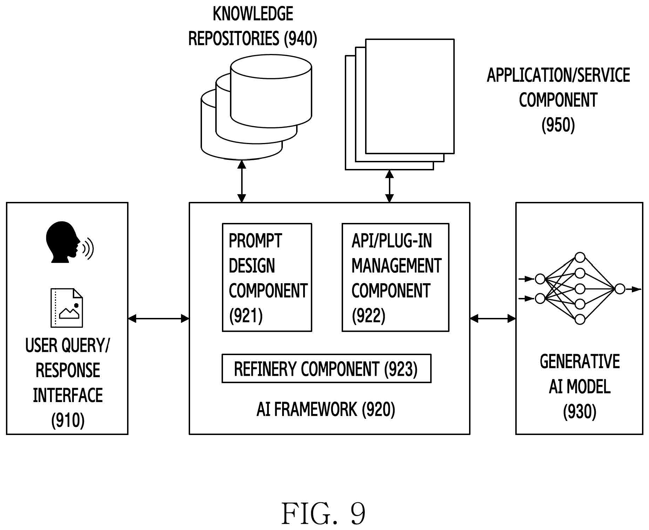

In an embodiment, the keyboard operation recommendation model 670 may include an artificial intelligence model trained to provide recommended setting and recommended words (or sentences) based on information about the keyboard setting pattern and information about the keyboard input pattern. For example, the electronic device 601 or the keyboard operation recommendation model 670 may include at least one of blocks of an artificial intelligence system of FIG. 9. For example, the electronic device 601 or the keyboard operation recommendation model 670 may include a Generative AI Model 930 of FIG. 9. In an embodiment, the keyboard application 650 may be operated based on the recommended setting and the recommended words provided from the keyboard operation recommendation model 670. For example, referring to FIG. 2B, the electronic device 101 may, in response to an event for text input, display the keyboard application 650 with the recommended setting, and along with this, may display visual objects 231, 232, and 233 based on the recommended words. Alternatively, an operation of the electronic device 601 using the keyboard operation recommendation model 670 may be performed by a server (e.g., the server 108 of FIG. 1) outside the electronic device 601. In this case, the electronic device 601 may transmit information about the keyboard setting pattern and information about the keyboard input pattern to the server outside the electronic device 601. Thereafter, the electronic device 601 may receive from the server outside the electronic device 601 information about the recommended setting and the recommended words based on the information about the keyboard setting pattern and the information about the keyboard input pattern. Alternatively, an operation of the electronic device 601 using the screen analysis model 610 may be performed by a server outside the electronic device 601. In this case, the electronic device 601 may transmit to the external server an image corresponding to the screen being displayed, and may receive from the external server an analysis result for the image.

In an embodiment, the electronic device 101 may display, through the display 260, a character corresponding to a key button received through the keyboard application 650. The electronic device 101 may transmit the character corresponding to the key button from the keyboard application 650 to the keyboard operation recommendation model 670. The electronic device 101 may obtain another recommended word associated with the key button from the keyboard operation recommendation model 670. The electronic device 101 may display the other recommended word through the display 260.

For example, referring to FIG. 2C, the electronic device 101 may receive an input to the key button 225 of the keyboard application 650, and may display a character corresponding to the key button 225 on the input area 215 within the execution screen 210. The electronic device 101 may display, in the second area 222 of the keyboard application 650, visual objects 241, 242, and 243 indicating the other recommended words associated with the character, obtained by using the character corresponding to the key button 225.

For example, referring to FIG. 3B, the electronic device 101 may receive an input to the key button 325 of the keyboard application 650, and may display a character corresponding to the key button 325 on the input area 315 within the execution screen 310. The electronic device 101 may display, in the second area 322 of the keyboard application 650, visual objects 341, 342, and 343 indicating the other recommended words associated with the character, obtained by using the character corresponding to the key button 325.

For example, referring to FIG. 4, the electronic device 101 may receive an input to a key button of the keyboard application 650, and may display a character corresponding to the key button on the input area 415 within the execution screen 410. The electronic device 101 may display, in the second area 422 of the keyboard application 650, visual objects 441, 442, and 443 indicating the other recommended words associated with the character, obtained by using the character corresponding to the key button.

For example, referring to FIG. 5, the electronic device 101 may receive an input to a key button of the keyboard application 650, and may display a character corresponding to the key button on the input area 515 within the execution screen 510. The electronic device 101 may display, in the second area 522 of the keyboard application 650, visual objects 541, 542, and 543 indicating the other recommended words associated with the character, obtained by using the character corresponding to the key button.

In an embodiment, the keyboard operation recommendation model 670 may include a personalized model generated based on information about an application, information about a counterpart in a conversation, information about a keyboard setting pattern, and information about a keyboard input pattern. For example, in a case of an interactive application such as the first application 642, the keyboard operation recommendation model 670 may be generated for each counterpart of the first application 642. For example, a keyboard operation recommendation model corresponding to a counterpart (e.g., girlfriend) indicated by the execution screen 210 of FIG. 2A and a keyboard operation recommendation model corresponding to a counterpart (e.g., boss) indicated by the execution screen 310 of FIG. 3A may be generated separately. For example, in a case of a non-interactive application such as the second application 644, the keyboard operation recommendation model 670 may be generated for each application. For example, a keyboard operation recommendation model corresponding to the second application of FIG. 4 and a keyboard operation recommendation model corresponding to the third application of FIG. 5 may be generated separately.

Through this, personalized keyboard setting and provision of recommended words may be possible according to a type of an application using the keyboard application 650 and a counterpart of a conversation. For example, even when the keyboard application 650 is invoked in the same application, recommended words that are at least partially different according to the counterpart may be provided, as in the visual objects 231, 232, and 233 of FIG. 2B and the visual objects 331, 332, and 333 of FIG. 3A. For example, even when the same key button of the keyboard application 650 (e.g., the key button 225 of FIG. 2C and the key button 325 of FIG. 3B) is input in the same application, recommended words that are at least partially different according to the counterpart may be provided, as in the visual objects 231, 232, and 233 of FIG. 2B and the visual objects 331, 332, and 333 of FIG. 3A. For example, recommended words different according to an application may be provided, as in the visual objects 331, 332, and 333 of FIG. 3A and the visual objects 431, 432, and 433 of FIG. 4.

Table 1 below shows an of data stored in the keyboard operation recommendation model 670.

**[Table 1]**

| Specific ID | Contact Info | Package Info | Input Field Info |
|---|---|---|---|
| Last Access Time | Last Used Language | Settings Value | Touch History |
| Target Language | Source Language | Sentences | User Language model |

Referring to Table 1, in an embodiment, the specific ID may include data related to the keyboard operation recommendation model 670, such as a last access time and a target language. The last access time may be a time at which the keyboard operation recommendation model 670 was last accessed. Since the keyboard operation recommendation model 670 is generated personalized for each application and counterpart, the number of keyboard operation recommendation models 670 may become too many. Therefore, there may be a limitation on the number of keyboard operation recommendation models 670. In a case that the number limitation is reached, a model with the oldest last access time may be deleted, and a new model may be generated.

The contact information may include data related to a counterpart, such as a last used language and a source language. When conversing with the counterpart, a keyboard application with a language setting corresponding to the last used language of the counterpart may be invoked.

In an embodiment, the target language and the source language may be data stored for providing a translation keyboard.

The package information may include data related to the keyboard application 650, such as setting values and sentences. The setting values may be data storing various setting values of the keyboard application 650. As a non-limiting example, the setting values may include setting value for keyboard layouts such as a QWERTY keyboard and a Dvorak keyboard, setting values for types of keyboards such as an English keyboard, a Korean keyboard, and a numeric keypad, and setting values for shortcut keys. Through this, a keyboard application with a stored setting value suitable for a usage situation may be invoked.

In an embodiment, the sentences may be data used by the operation recommendation model 670 to generate recommended words and to continuously learn, and may include natural language sentences obtained through screen analysis.

The input field information may include touch records and a user language model. The touch history stores values of input points for key buttons when the user uses the keyboard application 650, and by reflecting it in operation of the keyboard application 650, accuracy of user input may be improved. The user language model may be a trained language model of the user.

FIG. 7 is a flowchart illustrating an operation of an electronic device according to an embodiment. Operations of FIG. 7 may be performed by the electronic device 601 or the processor 620 of FIG. 6.

Referring to FIG. 7, in operation 710, the electronic device 601 may display an execution screen of an application through a display. The execution screen may include, for example, execution screens 210, 310, 410, or 510.

In operation 720, the electronic device 601 may identify whether a screen being displayed through the display is a screen in which a keyboard application may be used. A description of operation 720 may be substantially applied in the same manner as the description provided with reference to FIG. 6. For example, the electronic device 601 may identify a view area including a text input field among a plurality of view areas in the screen being displayed through the display. In this case, the electronic device 601 may identify that the screen is a screen in which the keyboard application may be used.

In operation 720, in a case that the screen is identified as a screen in which the keyboard application may be used, operation 730 may be performed, and otherwise, operation 710 may be performed.

In operation 730, the electronic device 601 may obtain keyboard usage information through analysis of the screen displayed on the display. A description of operation 730 may be substantially applied in the same manner as the description provided with reference to FIG. 6. For example, the usage information may include information about an application, a counterpart indicated by the screen, a keyboard setting pattern, and a keyboard input pattern.

In operation 740, the electronic device 601 may determine whether a pre-stored keyboard operation recommendation model corresponding to the keyboard usage information exists. As a non-limiting example, the electronic device 601 may determine whether a pre-stored keyboard operation recommendation model corresponding to the keyboard usage information exists by comparing the keyboard usage information obtained in operation 730 with keyboard usage information stored in a database. For example, the electronic device 601 may determine whether a pre-stored keyboard operation recommendation model corresponding to the user information exists by comparing the user information obtained in operation 730 with user information stored in the database.

In operation 740, when it is determined that a pre-stored keyboard operation recommendation model corresponding to the keyboard usage information exists, operation 750 may be performed, and otherwise, operation 770 may be performed.

In operation 770, the electronic device 601 may generate a keyboard operation recommendation model based on the keyboard usage information. The generated keyboard operation recommendation model may be a model personalized to an application and/or a counterpart corresponding to the keyboard usage information.

In operation 750, the electronic device 601 may receive (or detect) an event for text input. For example, the event for text input may include an event in which the electronic device 601 receives input to an input field in the screen being displayed through the display. For example, the event for text input may include an event in which the electronic device 601, while the screen including the input field is displayed, receives input through an external input device (e.g., a hardware keyboard) connected to the electronic device 601 wirelessly or by wire.

In operation 760, the electronic device 601 may load the keyboard operation recommendation model corresponding to the keyboard usage information and display a keyboard application by using the keyboard operation recommendation model. The electronic device 601 may display a keyboard application corresponding to a keyboard setting pattern and a keyboard input pattern output from the keyboard operation recommendation model.

FIG. 8 is a flowchart illustrating an operation of an electronic device according to an embodiment. Operations of FIG. 8 may be performed by the electronic device 601 or the processor 620 of FIG. 6.

Referring to FIG. 8, in operation 810, the electronic device 601 may display an execution screen of an application on a display. The execution screen may include execution screens 210, 310, 410, or 510.

In operation 820, while the execution screen is displayed, the electronic device 601 may display the execution screen and a software keyboard in response to an event for text input. For example, while the execution screen of the application is displayed on the display, the electronic device 601 may control the display to display the software keyboard (e.g., the keyboard application 650 of FIG. 6) with the execution screen of the application in response to the event for text input. For example, the software keyboard displayed in response to the event for the text input may include at least an area for providing a recommended word (e.g., the second area 222 of FIG. 2B or the second area 332 of FIG. 3A). For example, while an external input device (e.g., a hardware keyboard) is connected to the electronic device 601, the area for providing the recommended word of the software keyboard may be displayed and a keypad of the software keyboard (e.g., the first area 221 of FIG. 2B or the first area 331 of FIG. 3A) may not be displayed, but it is not limited thereto.

In operation 830, based on a user input received through a keyboard, the electronic device 601 may display at least one character corresponding to the user input within the execution screen. The keyboard may include, for example, a software keyboard. The keyboard may include, for example, an external input device connected wirelessly or by wire to the electronic device 601, such as a hardware keyboard. For example, based on a user input received through the software keyboard to input a character, the electronic device 601 may display at least one character corresponding to the user input within an input field in the execution screen. For another example, based on a user input received through the external input device, the electronic device 601 may display at least one character corresponding to the user input within the input field in the execution screen.

In operation 840, based on identifying the user input, the electronic device 601 may display at least one recommended word by using the at least one character and information about a counterpart indicated by the execution screen. For example, as illustrated in FIG. 2C, the electronic device 601 may display recommended words such as ' 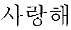 ' (I love you), ' 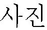 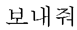 ' (Send me a photo), and ' 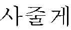 ' (I will buy it for you) by using the input character ' 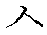 ' and information about the counterpart 'girlfriend' indicated by the execution screen 210. For example, as illustrated in FIG. 3B, the electronic device 601 may display recommended words such as ' 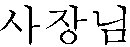 ' (Boss), ' 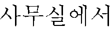 ' (at the office), and ' 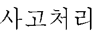 ' (accident handling) by using the input character ' 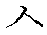 ' and information about the counterpart 'boss' indicated by the execution screen 310.

FIG. 9 is an exemplary block diagram illustrating a generative artificial intelligence system according to an embodiment. In FIG. 9, an exemplary artificial intelligence system including a User Query/Response Interface 910, an AI framework 920, a Generative AI Model 930, knowledge repositories 940, and an application/service component 950 is illustrated. According to an embodiment, a processor (e.g., the processor 120 of FIG. 1) of an electronic device (e.g., the electronic device 101 of FIG. 1) may execute one or more programs distinguished by the blocks of FIG. 9 to execute functions related to generative artificial intelligence.

In an embodiment, the User Query/Response Interface 910 may receive a user input. The user input may be in a form such as natural language, an image, and/or a video. In addition, when transmitting the user input, context information may also be transmitted. The context information may include various supplementary information at a time of the user input. For example, the context information may include information about an application currently used by a user or information about a location of the user. The user input may also be in a mixed form of the above-described natural language, image, sound, and context information. In addition, the user input may be in a non-natural language form, such as selecting a menu. The User Query/Response Interface 910 may output a result of the generative artificial intelligence system to the user. The output may be in a form of natural language or specific content, and may also be provided in a form of an action requested by the user. The User Query/Response Interface 910 may output a result of the generative artificial intelligence system to the user. The output may be in a form of natural language or specific content, and may also be provided in a form of an action requested by the user.

The AI framework 920 may receive the user input and may coordinate and control each component necessary to perform an intention of the user based on a user query. The AI framework 920 may include a prompt design component 921, an API/plug-in management component 922, and a refinery component 923.

The user input received from the User Query/Response Interface 910 may be transmitted to the prompt design component 921. The prompt design component 921 may be used to generate a prompt suitable for inputting the user input into an LLM or a Large Multimodal Model (LMM). The prompt design component 921 may be an AI component that uses machine learning algorithms or neural networks to develop better prompts over time. Based on the user input, the prompt design component 921 may generate a prompt by accessing the knowledge repositories 940 including user preference data, prompt libraries, and prompt examples, and may deliver the generated prompt to the LLM or the LMM.

The API/plug-in management component 922 may perform a role of communicating with external information when there is a request for additional information while delivering the user input as an input to the generative model. The API/plug-in management component 922 may establish a channel capable of communicating with the outside of the AI framework 920 through an application programming interface (API), and may allow access to various data sources through the established channel. In addition, when an action for ultimately performing the user input, rather than an intermediate result, needs to be performed in the application/service component 950 (e.g., the program 140 or the application 146 of FIG. 1), the API/plug-in management component 922 may request the corresponding action through the API. Information obtained from the outside may be used with the user input to generate a prompt in the prompt design component 921, or may be delivered as input to the generative model.

The refinery component 923 (or an output modification component) may finely tune a result output from the Generative AI Model 930. For example, the refinery component 923 may verify whether content generated through the LLM and/or the LMM is irrelevant, contains biased content, or contains harmful content. In addition, the refinery component 923 may also determine to what extent the output matches a desired result of the user, and in a case that an additional process is required, may perform the additional process. The refinery component 923 may additionally configure a hint to avoid undesired output and may provide it to the user.

The Generative AI Model 930 may generally refer to an artificial intelligence neural network that generates new forms of data relying on user input information. The Generative AI Model 930 may include a model that generates images and/or a model that generates language. Examples of models that generate images include, representatively, a generative adversarial network (GAN) and a variational auto encoder (VAE), and may further include a diffusion-based generative model using a VAE and a transformer architecture. A model that generates language may be a model trained to output a statistically most appropriate output value based on an input value, and representative examples thereof may include models such as CHAT-GPT 3 and CHAT-GPT 4. In addition, there may be large multimodal models (LMMs) capable of recognizing various forms of data input, such as text, images, and voice, and generate corresponding new data.

According to an embodiment, an electronic device (e.g., the electronic device 601 of FIG. 6) may comprise a display (e.g., the display 660 of FIG. 6), memory (e.g., the memory 630 of FIG. 6) storing instructions, and a processor (e.g., the processor 620 of FIG. 6). The instructions, when executed by the processor, may cause the electronic device to control the display such that, while an execution screen (e.g., execution screens 210, 310, 410, or 510) of an application (e.g., the first application 642 or the second application 644 of FIG. 6) is displayed on the display, in response to an event for text input, the execution screen displayed in an entire display area of the display is displayed in a portion of the display area of the display, and a software keyboard (e.g., the keyboard application 650 of FIG. 6) is displayed in a remaining portion. The instructions, when executed by the processor, may cause the electronic device to, while displaying on the display the software keyboard comprising a first area (e.g., first areas 221, 321, 421, or 521) including visual objects corresponding to different characters and a second area (e.g., second areas 222, 322, 422, or 522), display at least one character corresponding to a user input within the execution screen based on the user input received through the remaining portion. The instructions, when executed by the processor, may cause the electronic device to, based on identifying the user input, display at least one word (e.g., visual objects 241, 242, 243, 341, 342, 343, 441, 442, 443, 541, 542, or 543) in the second area using the at least one character and information about a counterpart indicated by the execution screen.

In an embodiment, the instructions, when executed by the processor, may cause the electronic device to, in response to an input to the second area in which the at least one word is displayed, display the at least one word within the execution screen of the application through the display.

In an embodiment, the instructions, when executed by the processor, may cause the electronic device to obtain a capture image of a screen that includes the execution screen of the application and is displayed on the display. The instructions, when executed by the processor, may cause the electronic device to obtain the information about the counterpart indicated by the execution screen using analysis of the capture image.

The instructions, when executed by the processor, may cause the electronic device to obtain the information about the counterpart using an artificial intelligence model trained to analyze images based on a content capture service.

In an embodiment, the instructions, when executed by the processor, may cause the electronic device to, in response to detecting that the execution screen of the application is a screen capable of inputting text, obtain the information about the counterpart.

In an embodiment, the instructions, when executed by the processor, may cause the electronic device to display the at least one word in the second area using a keyboard input pattern corresponding to the information about the counterpart.

In an embodiment, the instructions, when executed by the processor, may cause the electronic device to obtain keyboard setting pattern information corresponding to the information about the counterpart. The instructions, when executed by the processor, may cause the electronic device to, in response to the event for the text input, display the software keyboard with setting corresponding to the keyboard setting pattern information.

In an embodiment, the setting may include language setting of the different characters of the software keyboard and layout setting of the visual objects corresponding to the different characters.

In an embodiment, the instructions, when executed by the processor, may cause the electronic device to obtain the at least one word using an artificial intelligence model (e.g., the keyboard operation recommendation model 670 of FIG. 6) that is trained to generate a recommended word based on input received through the software keyboard and corresponds to the information about the counterpart.

In an embodiment, the instructions, when executed by the processor, may cause the electronic device to, in response to confirming that the artificial intelligence model corresponding to the information about the counterpart is pre-stored, load the pre-stored artificial intelligence model. The instructions, when executed by the processor, may cause the electronic device to, in response to confirming that the artificial intelligence model corresponding to the information about the counterpart is not pre-stored, generate the artificial intelligence model corresponding to the information about the counterpart.

In an embodiment, the execution screen of the application may include a chat screen with the counterpart. The instructions, when executed by the processor, may cause the electronic device to, in a case that the counterpart is a first counterpart, display the at least one word in the second area based on an input to a first text key (e.g., the key button 225 of FIG. 2C) of the software keyboard. The instructions, when executed by the processor, may cause the electronic device to, in a case that the counterpart is a second counterpart different from the first counterpart, display at least one other word different from the at least one word in the second area based on an input to the first text key (e.g., the key button 325 of FIG. 3B) of the software keyboard.

According to an embodiment, an electronic device (e.g., the electronic device 601 of FIG. 6) may comprise a display (e.g., the display 660 of FIG. 6), memory (e.g., the memory 630 of FIG. 6) storing instructions, and a processor (e.g., the processor 620 of FIG. 6). The instructions, when executed by the processor, may cause the electronic device to display an execution screen (e.g., execution screens 210, 310, 410, or 510) of an application (e.g., the first application 642 or the second application 644 of FIG. 6) on the display. The instructions, when executed by the processor, may cause the electronic device to, while the execution screen of the application is displayed, in response to an event for text input, display a software keyboard (e.g., the keyboard application 650 of FIG. 6) with the execution screen of the application through the display. The instructions, when executed by the processor, may cause the electronic device to, while displaying on the display the software keyboard comprising a first area including a plurality of character keys and a second area for displaying one or more recommended words, receive a user input with respect to one or more of the plurality of character keys. The instructions, when executed by the processor, may cause the electronic device to display at least one character corresponding to the user input within an input field in the execution screen. The instructions, when executed by the processor, may cause the electronic device to display at least one recommended word (e.g., visual objects 241, 242, 243, 341, 342, 343, 441, 442, 443, 541, 542, or 543) in the second area using the at least one character and information about a counterpart indicated by the execution screen.

In an embodiment, the instructions, when executed by the processor, may cause the electronic device to, in response to an input to select the at least one recommended word in the second area, display, through the display, a selected recommended word among the at least one recommended word within input field in the execution screen of the application.

In an embodiment, the instructions, when executed by the processor, may cause the electronic device to obtain a capture image of a screen displayed on the display. The capture image may include the execution screen of the application and conversation content with the counterpart indicated by the execution screen. The instructions, when executed by the processor, may cause the electronic device to obtain the information about the counterpart indicated by the execution screen using analysis of the capture image.

The instructions, when executed by the processor, may cause the electronic device to obtain the information about the counterpart using an artificial intelligence model trained to analyze images based on a content capture service.

In an embodiment, the instructions, when executed by the processor, may cause the electronic device to, in response to detecting that the execution screen of the application is a screen capable of inputting text, obtain the information about the counterpart.

In an embodiment, the instructions, when executed by the processor, may cause the electronic device to display the at least one recommended word in the second area using a keyboard input pattern corresponding to the information about the counterpart.

In an embodiment, the instructions, when executed by the processor, may cause the electronic device to obtain keyboard setting pattern information corresponding to the information about the counterpart. The instructions, when executed by the processor, may cause the electronic device to, in response to the event for the text input, display the software keyboard with setting corresponding to the keyboard setting pattern information.

In an embodiment, the setting may include language setting of the different characters of the software keyboard and layout setting of the visual objects corresponding to the different characters.

In an embodiment, the instructions, when executed by the processor, may cause the electronic device to obtain the at least one recommended word using an artificial intelligence model (e.g., the keyboard operation recommendation model 670 of FIG. 6) that is trained to generate a recommended word based on input received through the software keyboard and corresponds to the information about the counterpart.

In an embodiment, the instructions, when executed by the processor, may cause the electronic device to, in response to confirming that the artificial intelligence model corresponding to the information about the counterpart is pre-stored, load the pre-stored artificial intelligence model. The instructions, when executed by the processor, may cause the electronic device to, in response to confirming that the artificial intelligence model corresponding to the information about the counterpart is not pre-stored, generate the artificial intelligence model corresponding to the information about the counterpart.

In an embodiment, the execution screen of the application may include a chat screen with the counterpart. The instructions, when executed by the processor, may cause the electronic device to, in a case that the counterpart is a first counterpart, display the at least one recommended word in the second area based on an input to a first text key (e.g., the key button 225 of FIG. 2C) of the software keyboard. The instructions, when executed by the processor, may cause the electronic device to, in a case that the counterpart is a second counterpart different from the first counterpart, display at least one other recommended word different from the at least one recommended word in the second area based on an input to the first text key (e.g., the key button 325 of FIG. 3B) of the software keyboard.

According to an embodiment, an electronic device (e.g., the electronic device 601 of FIG. 6) may comprise a display (e.g., the display 660 of FIG. 6), memory (e.g., the memory 630 of FIG. 6) storing instructions, and a processor (e.g., the processor 620 of FIG. 6). The instructions, when executed by the processor, may cause the electronic device to display, through the display, a screen including an execution screen of an application and a keyboard interface. The instructions, when executed by the processor, may cause the electronic device to identify a counterpart indicated by the execution screen using analysis of the execution screen. The instructions, when executed by the processor, may cause the electronic device to, in a case that the identified counterpart is a first counterpart, display a first recommended word within the keyboard interface in response to an input to a first text key received through the keyboard interface. The instructions, when executed by the processor, may cause the electronic device to, in a case that the identified counterpart is a second counterpart different from the first counterpart, display a second recommended word different from the first recommended word within the keyboard interface in response to an input to the first text key received through the keyboard interface.

In an embodiment, the instructions, when executed by the processor, may cause the electronic device to, while the execution screen of the application is displayed on the display, in response to an event for text input, control the display to display the execution screen displayed in an entire display area of the display in a portion of the display area of the display and display the keyboard interface in a remaining portion.

In an embodiment, the instructions, when executed by the processor, may cause the electronic device to determine keyboard setting corresponding to the identified counterpart, and the instructions, when executed by the processor, may cause the electronic device to, in response to the event for the text input, display the keyboard interface with the keyboard setting through the display.

In an embodiment, the instructions, when executed by the processor, may cause the electronic device to identify a category of the application using analysis of the execution screen, and the instructions, when executed by the processor, may cause the electronic device to, in a case that the identified category is a non-interactive application where the counterpart is not indicated by the execution screen, in response to an input to the first text key received through the keyboard interface, display a third recommended word different from the first recommended word and the second recommended word within the keyboard interface.

In an embodiment, the instructions, when executed by the processor, may cause the electronic device to, in response to the input to the first text key, display text corresponding to the first text key within the execution screen of the application.

According to an embodiment, an electronic device (e.g., the electronic device 601 of FIG. 6) may comprise a display (e.g., the display 660 of FIG. 6), memory (e.g., the memory 630 of FIG. 6) storing instructions, and a processor (e.g., the processor 620 of FIG. 6). The instructions, when executed by the processor, may cause the electronic device to display an execution screen of an application through the display. The instructions, when executed by the processor, may cause the electronic device to, while the execution screen is displayed on the display, in response to an event for text input, display, through the display, a software keyboard in a portion of an entire display area of the display. The instructions, when executed by the processor, may cause the electronic device to, based on detecting a counterpart indicated by the execution screen using analysis of the execution screen, determine a keyboard usage pattern corresponding to the counterpart, and display, through the display, at least one recommended word using the keyboard usage pattern and at least one character received through the software keyboard.

In an embodiment, the instructions, when executed by the processor, may cause the electronic device to determine keyboard setting corresponding to the counterpart based on detecting the counterpart indicated by the execution screen using analysis of the execution screen. The instructions, when executed by the processor, may cause the electronic device to, in response to the event for the text input, display the software keyboard with the keyboard setting through the display.

In an embodiment, the instructions, when executed by the processor, may cause the electronic device to, in response to receiving the at least one character through the software keyboard, display the at least one character within an input field of the execution screen of the application.

In an embodiment, the instructions, when executed by the processor, may cause the electronic device to, in response to an input to the at least one word displayed through the display, display the at least one word within an input field of the execution screen of the application.

According to an embodiment, a method of an electronic device 601 comprising a display 660 may comprise displaying an execution screen of an application through the display 660; while the execution screen of the application is displayed, in response to an event for text input, displaying a software keyboard with the execution screen of the application through the display 660; while displaying on the display 660 the software keyboard comprising a first area including a plurality of character keys and a second area for displaying one or more recommended words, receiving a user input with respect to one or more of the plurality of character keys; displaying at least one character corresponding to the user input within an input field in the execution screen; and displaying at least one recommended word in the second area using the at least one character and information about a counterpart indicated by the execution screen.

In an embodiment, the method may comprise identifying a counterpart indicated by the execution screen, in a case that the identified counterpart is a first counterpart, displaying a first recommended word within the keyboard interface based on an input to a first text key among the plurality of character keys, and in a case that the identified counterpart is a second counterpart different from the first counterpart, displaying a second recommended word different from the first recommended word in the second area in response to an input to the first text key.

In an embodiment, the method may comprise identifying a category of the application, and in a case that the identified category is a non-interactive application in which the counterpart is not indicated by the execution screen, displaying a third recommended word different from the first recommended word and the second recommended word in the second area in response to an input to the first text key.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a display;
memory storing instructions; and
a processor,
wherein the instructions, when executed by the processor, cause the electronic device to:
display an execution screen of an application through the display;
while the execution screen of the application is displayed, in response to an event for text input, display a software keyboard with the execution screen of the application through the display;
while displaying on the display the software keyboard comprising a first area including a plurality of character keys and a second area for displaying one or more recommended words, receive a user input with respect to one or more of the plurality of character keys;
display at least one character corresponding to the user input within an input field in the execution screen; and
display, using the at least one character and information about a counterpart indicated by the execution screen, at least one recommended word in the second area.

2. The electronic device of claim 1,
wherein the instructions, when executed by the processor, cause the electronic device to:
in response to an input to select the at least one recommended word in the second area, display, through the display, a selected recommended word among the at least one recommended word within the input field in the execution screen of the application.

3. The electronic device of claim 1,
wherein the instructions, when executed by the processor, cause the electronic device to:
obtain a capture image of a screen displayed on the display, the capture image including the execution screen of the application and conversation content with the counterpart indicated by the execution screen; and
obtain, using analysis of the capture image, the information about the counterpart indicated by the execution screen.

4. The electronic device of claim 3,
wherein the instructions, when executed by the processor, cause the electronic device to:
obtain the information about the counterpart using an artificial intelligence model trained to analyze images based on a content capture service.

5. The electronic device of claim 4,
wherein the instructions, when executed by the processor, cause the electronic device to:
in response to detecting that the execution screen of the application is a screen capable of inputting text, obtain the information about the counterpart.

6. The electronic device of any one of claims 3 to 5,
wherein the instructions, when executed by the processor, cause the electronic device to:
display the at least one recommended word in the second area using a keyboard input pattern corresponding to the information about the counterpart.

7. The electronic device of any one of claims 3 to 5,
wherein the instructions, when executed by the processor, cause the electronic device to:
obtain keyboard setting pattern information corresponding to the information about the counterpart; and
in response to the event for the text input, display the software keyboard with setting corresponding to the keyboard setting pattern information.

8. The electronic device of claim 7,
wherein the setting includes:
language setting of the different characters of the software keyboard; and
layout setting of the visual objects corresponding to the different characters.

9. The electronic device of claim 3,
wherein the instructions, when executed by the processor, cause the electronic device to:
obtain the at least one recommended word using an artificial intelligence model that is trained to generate a recommended word based on input received through the software keyboard and corresponds to the information about the counterpart.

10. The electronic device of claim 9,
wherein the instructions, when executed by the processor, cause the electronic device to:
in response to confirming that the artificial intelligence model corresponding to the information about the counterpart is pre-stored, load the pre-stored artificial intelligence model; and
in response to confirming that the artificial intelligence model corresponding to the information about the counterpart is not pre-stored, generate the artificial intelligence model corresponding to the information about the counterpart.

11. The electronic device of any one of claims 1 to 10,
wherein the execution screen of the application includes a chat screen with the counterpart, and
wherein the instructions, when executed by the processor, cause the electronic device to:
in a case that the counterpart is a first counterpart:
based on an input to a first text key of the software keyboard, display the at least one recommended word in the second area; and
in a case that the counterpart is a second counterpart different from the first counterpart:
based on an input to the first text key of the software keyboard, display at least one other recommended word different from the at least one recommended word in the second area.

12. The electronic device of claim 1,
wherein the instructions, when executed by the processor, cause the electronic device to:
obtain the information about the counterpart by confirming contact information corresponding to text information included in the execution screen, and
wherein the contact information includes at least one of the counterpart's phone number, address, group, ID, and name.

13. A method of an electronic device comprising a display, the method comprising:
displaying an execution screen of an application through the display;
while the execution screen of the application is displayed, in response to an event for text input, displaying a software keyboard with the execution screen of the application through the display;
while displaying on the display the software keyboard comprising a first area including a plurality of character keys and a second area for displaying one or more recommended words, receiving a user input with respect to one or more of the plurality of character keys;
displaying at least one character corresponding to the user input within an input field in the execution screen; and
displaying, using the at least one character and information about a counterpart indicated by the execution screen, at least one recommended word in the second area.

14. The method of claim 13 comprising:
identifying a counterpart indicated by the execution screen;
in a case that the identified counterpart is a first counterpart:
based on an input to a first text key among the plurality of character keys, displaying a first recommended word within the keyboard interface; and
in a case that the identified counterpart is a second counterpart different from the first counterpart:
in response to an input to the first text key, displaying a second recommended word different from the first recommended word in the second area.

15. The method of claim 13 or claim 14 comprising:
identifying a category of the application; and
in a case that the identified category is a non-interactive application in which the counterpart is not indicated by the execution screen:
in response to an input to the first text key, displaying a third recommended word different from the first recommended word and the second recommended word in the second area.
